# EUROPEAN PATENT APPLICATION

(11) **EP 2 977 926 A1**
(43) Date of publication of application: **27.01.2016**
(21) Application number: 15176130.1
(22) Date of filing: 09.07.2015
(51) Int. Cl.: G06F 21/36

(54) **METHOD AND DEVICE FOR VERIFICATION USING VERIFICATION CODE**

(30) Priority: 25.07.2014 CN 201410360887
(71) Applicant: Xiaomi Inc., Beijing 100085 (CN)
(72) Inventor: ZHANG, Hua, 100085 Beijing (CN); XIA, Yi, 100085 Beijing (CN)
(74) Representative: Sackin, Robert

(57) **Abstract**

The present disclosure relates to a method and a device for verification using a verification code. The method includes: when an acquiring request for the verification code from a terminal is received, generating verification code acquiring information for current verification, which includes a verification identifier, and an operation object and operation manner prompt information for acquiring the verification code (S11); sending the verification code acquiring information to the terminal (S12); receiving a verification request from the terminal, wherein the verification request includes the verification identifier and according to the operation manner prompt information (S13). The user does not need to manually input the verification code, thus the verification manner is simplified, and verification failure caused by incorrect manual input by the user is avoided, verification efficiency of the verification code is increased, and the user experience is improved.

## Description

### TECHNICAL FIELD

The present disclosure generally relates to the field of Internet technology, and more particularly, to a method and a device for verification using a verification code.

### BACKGROUND

Currently, when a user uses a network application, verification of a verification code is generally needed, and only when the verification of the verification code is passed, the user may use the network application.

In the related art, an implementation manner of the verification code is mainly through user input, including input of figures, Chinese characters or the like. This implementation manner of the verification code is inconvenient for the user. Firstly, it is a tedious work for the user to input the verification code, it wastes time of the user, and influences the user experience of the network application, and it is more inconvenient for the user to operate especially when the user inputs the verification code on a mobile terminal (such as a cellphone); secondly, for the purpose of increasing the difficulty for a machine to identify, some verification codes are too complex, for example, Chinese characters need to be input, or a generated verification code is subjected to fuzzy processing, distortion processing, character adhesion processing or the like. In this way, the difficulty for the user to input the verification code is increased a lot, thus input is easy to be incorrect, which will result in that the network application can not be normally used, and the user experience is degraded.

### SUMMARY

In order to overcome the problems existing in the related art, the present disclosure provides a method and a device for verification using a verification code.

According to a first aspect of embodiments of the present disclosure, there is provided a method for verification using a verification code, at server, including:
when an acquiring request for the verification code from a terminal is received, generating verification code acquiring information for current verification, which includes a verification identifier, and an operation object and operation manner prompt information for acquiring the verification code;
sending the verification code acquiring information to the terminal;
receiving a verification request from the terminal, wherein the verification request includes the verification identifier and a first verification code obtained after the operation object is operated according to the operation manner prompt information; and
verifying the first verification code in the verification request.
Technical solutions provided by the embodiments of the present disclosure may produce the following advantageous effects. The user does not need to manually input the verification code, thus the verification manner is simplified, and verification failure caused by incorrect manual input by the user is avoided, verification efficiency of the verification code is increased, and the user experience is improved.

Before the sending the verification identifier to the terminal, the method may further include:

operating the operation object according to the operation manner prompt information, to obtain a second verification code.

A server may correctly operate the operation object according to the operation manner prompt information at first, thereby a verification code obtained by an operation of the user may be verified.

The verifying the first verification code in the verification request may include:
extracting the second verification code according to the verification identifier;
comparing the first verification code with the second verification code; and
determining whether the first verification code is the same as the second verification code.

The second verification code may correspond to the verification identifier compared with the first verification code obtained by the operation of the user, thereby whether the operation on the operation object of the verification code by the user is correct or not is verified.

The operation object of the verification code may include at least two characters, wherein each character corresponds to a separate movable picture.

Each character in the operation object may correspond to a separate movable picture, such that the user may separately operate each character according to the operation manner prompt information.

The operation manner prompt information may include prompt information for dragging a specified character in the operation object to a specified position; and

the first verification code may include position information of the obtained character after the character in the operation object is dragged.

The user may drag the character in the operation object according to the operation manner prompt information, such that the user does not need to manually input the verification code, thus the verification manner is simplified, and verification failure caused by incorrect manual input by the user is avoided, verification efficiency of the verification code is increased, and the user experience is improved.

The position information may be determined according to an arrangement sequence after the character is dragged.

According to a second aspect of the embodiments of the present disclosure, there is provided a method for verification using a verification code, at client, including:

sending an acquiring request for the verification code to a network side;
acquiring verification code acquiring information for current verification, which includes a verification identifier, and an operation object and operation manner prompt information for acquiring the verification code;
receiving an operation action on the operation object according to the operation manner prompt information;
obtaining a first verification code according to the operation action; and
sending a verification request to the network side, wherein the verification request includes the verification identifier and the first verification code.

The technical solutions provided by the embodiments of the present disclosure may produce the following advantageous effects. The user operates the operation object according to the operation manner prompt information of the verification code, and sends the result obtained after the operation to the network side to be verified, such that the user does not need to manually input the verification code, thus the verification manner is simplified, and verification failure caused by incorrect manual input by the user is avoided, verification efficiency of the verification code is increased, and the user experience is improved.

The operation object of the verification code may include at least two characters, wherein each character corresponds to a separate movable picture, and
the operation manner prompt information may include prompt information for dragging a specified character in the operation object to a specified position.

The receiving the operation action on the operation object according to the operation manner prompt information may include:
receiving a dragging action on the specified character in the operation object.

The obtaining the first verification code according to the operation action may include:
acquiring position information of the dragged character according to the dragging action.

The operation manner prompt information may be by dragging a separate character in the operation object to a specified position, and the user dragging the character in the operation object according to the operation manner prompt information, such that the user does not need to manually input the verification code, thus the verification manner is simplified, and verification failure caused by incorrect manual input by the user is avoided, verification efficiency of the verification code is increased, and the user experience is improved.

According to a third aspect of the embodiments of the present disclosure, there is provided a method for verification using a verification code, including:
sending an acquiring request for the verification code from a terminal side to a network side;
when the network side receives the acquiring request, generating, by the network side, verification code acquiring information for current verification, which includes a verification identifier, and an operation object and operation manner prompt information for acquiring the verification code;
sending the verification code acquiring information from the network side to the terminal side;
acquiring the verification code acquiring information by the terminal side;
operating the operation object according to the operation manner prompt information by the terminal side;
obtaining a first verification code according to the operating by the terminal side;
sending a verification request from the terminal side to the network side, wherein the verification request includes the verification identifier and the first verification code;
receiving the verification request by the network side; and
verifying the first verification code in the verification request by the network side.

The technical solutions provided by the embodiments of the present disclosure may produce the following advantageous effects. The operation object is operated according to the operation manner prompt information of the verification code, and the result obtained after the operation is verified, such that the user does not need to manually input the verification code, thus the verification manner is simplified, and verification failure caused by incorrect manual input by the user is avoided, verification efficiency of the verification code is increased, and the user experience is improved.

According to a fourth aspect of the embodiments of the present disclosure, there is provided a server device for verification using a verification code, including:
a generation module configured to, when an acquiring request for the verification code from a terminal is received, generate verification code acquiring information for current verification, which includes a verification identifier, and an operation object and operation manner prompt information for acquiring the verification code;
a first sending module configured to send the verification code acquiring information to the terminal;
a first receiving module configured to receive a verification request from the terminal, wherein the verification request includes the verification identifier and a first verification code obtained after the operation object is operated according to the operation manner prompt information; and
a verification module configured to verify the first verification code in the verification request.

The server device may further include:
an operation module configured to operate the operation object according to the operation manner prompt information, to obtain a second verification code.

The verification module may include:
an extraction unit configured to extract the second verification code according to the verification identifier;
a comparison unit configured to compare the first verification code with the second verification code; and
a determination unit configured to determine whether the first verification code is the same as the second verification code.

According to a fifth aspect of the embodiments of the present disclosure, there is provided a client device for verification using a verification code, including:
a second sending module configured to send an acquiring request for the verification code to a network side;
a first acquiring module configured to acquire verification code acquiring information for current verification, which includes a verification identifier, and an operation object and operation manner prompt information for acquiring the verification code;
a second receiving module configured to receive an operation action on the operation object according to the operation manner prompt information;
a second acquiring module configured to obtain a first verification code according to the operation action; and
a third sending module configured to send a verification request to the network side, wherein the verification request includes the verification identifier and the first verification code.

The second receiving module may include:
a receiving unit configured to receive a dragging action on a specified character in the operation object, and
the second acquiring module includes:
an acquiring unit configured to acquire position information of the dragged character according to the dragging action.

According to a sixth aspect of the embodiments of the present disclosure, there is provided a device for verification using a verification code, including:
a processor;
a memory for storing instructions executable by the processor,
wherein the processor is configured to:
when an acquiring request for the verification code from a terminal is received, generate verification code acquiring information for current verification, which includes a verification identifier, and an operation object and operation manner prompt information for acquiring the verification code;
send the verification code acquiring information to the terminal;
receive a verification request from the terminal, wherein the verification request includes the verification identifier and a first verification code obtained after the operation object is operated according to the operation manner prompt information; and
verify the first verification code in the verification request.

According to a seventh aspect of the embodiments of the present disclosure, there is provided a device for verification using a verification code, including:
a processor;
a memory for storing instructions executable by the processor,
wherein the processor is configured to:
send an acquiring request for the verification code to a network side;
acquire verification code acquiring information for current verification, which includes a verification identifier, and an operation object and operation manner prompt information for acquiring the verification code;
receive an operation action on the operation object according to the operation manner prompt information;
obtain a first verification code according to the operation action; and
send a verification request to the network side, wherein the verification request includes the verification identifier and the first verification code.

According to an eighth aspect of the embodiments of the present disclosure, there is provided a computer program which, when executing on a processor of a server, performs the method for verification using a verification code according to the first aspect of embodiments of the present disclosure or according to the second aspect of embodiments of the present disclosure.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments being consistent with the disclosure and, together with the description, serve to explain the principles of the disclosure.
Fig. 1 is a flow chart showing a method for verification using a verification code, according to an exemplary embodiment.
Fig. 2 is a flow chart showing a method for verification using a verification code, according to an exemplary embodiment.
Fig. 3 is a flow chart showing a method for verification using a verification code, according to an exemplary embodiment.
Fig. 4 is a flow chart showing a method for verification using a verification code, according to a detailed embodiment.
Fig. 5 is a diagram illustrating an interface of an operation object of a verification code, according to a detailed embodiment.
Fig. 6 is a diagram illustrating an interface of operation manner prompt information of a verification code, according to a detailed embodiment.
Fig. 7 is a flow chart showing a method for verification using a verification code, according to another detailed embodiment.
Fig. 8 is a block diagram illustrating a device for verification using a verification code, according to an exemplary embodiment.
Fig. 9 is a block diagram illustrating a verification module in a device for verification using a verification code, according to an exemplary embodiment.
Fig. 10 is a block diagram illustrating a device for verification using a verification code, according to an exemplary embodiment.
Fig. 11 is a block diagram illustrating a second receiving module in a device for verification using a verification code, according to an exemplary embodiment.
Fig. 12 is a block diagram illustrating a second acquiring module in a device for verification using a verification code, according to an exemplary embodiment.
Fig. 13 is a block diagram illustrating a device for verification using a verification code, according to an exemplary embodiment.
Fig. 14 is a block diagram illustrating a device for verification using a verification code, according to an exemplary embodiment.

### DETAILED DESCRIPTION

Exemplary embodiments will be described in details herein, with examples thereof shown in drawings. In the following descriptions, when the drawings are referred to, unless expressed otherwise, the same number in different drawings refers to the same or similar elements. The implementary manners described in the exemplary embodiments below do not represent all implementary manners that are consistent with the present disclosure. On the contrary, they are only examples of devices and methods that are consistent with some aspects of the present disclosure as recited in the claims.

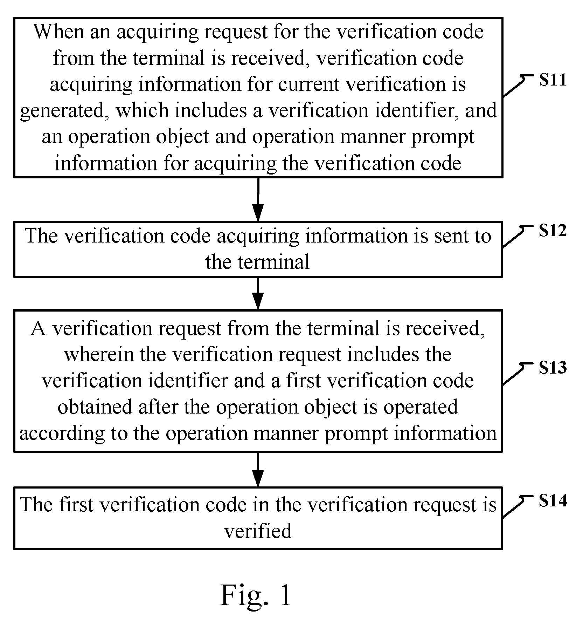

Fig. 1 is a flow chart showing a method for verification using a verification code, according to an exemplary embodiment. As shown in Fig. 1, the method for the verification using the verification code is applied in a server and includes the following steps.

In step S 11, when an acquiring request for the verification code from a terminal is received, verification code acquiring information for current verification is generated, which includes a verification identifier, and an operation object and operation manner prompt information for acquiring the verification code.

In step S12, the verification code acquiring information is sent to the terminal.

In step S13, a verification request from the terminal is received, wherein the verification request includes the verification identifier and a first verification code obtained after the operation object is operated according to the operation manner prompt information.

In step S 14, the first verification code in the verification request is verified.

The technical solution provided by the present embodiment may produce the following advantageous effects: the operation object is operated according to the operation manner prompt information of the verification code, and the result obtained after the operation is verified, such that the user does not need to manually input the verification code, thus the verification manner is simplified, and verification failure caused by incorrect manual input by the user is avoided, verification efficiency of the verification code is increased, and the user experience is improved.

In the above described method, the terminal may be a computer that uses a mouse, a cellphone or an ipad (tablet PC) that uses a touchscreen or the like.

In the step S11, the verification identifier may be an encrypted token.

Alternatively, before carrying out the step S12, the above described method further includes: operating the operation object according to the operation manner prompt information, to obtain a second verification code. Before the server sends the verification code acquiring information to the terminal, the server correctly operates the operation object according to the operation manner prompt information at first, and then obtains and stores the second verification code.

Alternatively, the step S14 may be carried out as the following steps.

In step S141, the second verification code is extracted according to the verification identifier.

In step S 142, the first verification code is compared with the second verification code.

In step S143, whether the first verification code is the same as the second verification code is determined.

When the server verifies the first verification code in the verification request, the server may verify whether the first verification code is correct by comparing the first verification code with a prestored second verification code. When the first verification code is the same as the second verification code, the verification is passed; and when the first verification code is different from the second verification code, the verification is not passed.

After the step S143, the server feeds back the verification result to the terminal, which includes: A11, when the verification is passed, sending verification passing information to the terminal; and A12, when the verification is not passed, generating verification code acquiring information of next verification, and sending it to the terminal.

Alternatively, the operation object of the verification code includes at least two characters, wherein each character corresponds to a separate movable picture. The characters in the operation object are displayed in a form of picture, and are displayed on the terminal in a certain arrangement sequence.

When the operation object includes a plurality of separate movable pictures, the operation manner prompt information includes prompt information for dragging a specified character in the operation object to a specified position; and the first verification code includes position information of the obtained character after the character in the operation object is dragged. For example, the operation object includes four characters "A", "B", "C" and "D", and the operation manner prompt information is to drag and switch positions of the characters "A" and "C". Under the prompt of the operation manner, the characters "A" and "C" is dragged by the user, position information of the dragged characters is obtained. The position information is determined according to an arrangement sequence after the characters are dragged.

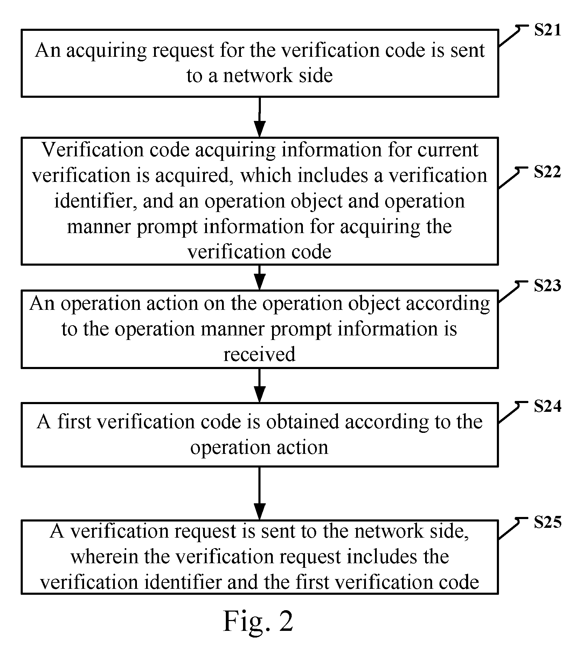

Fig. 2 is a flow chart showing a method for verification using a verification code, according to an exemplary embodiment. Referring to Fig. 2, the method includes the following steps.

In step S21, an acquiring request for the verification code is sent to a network side.

In step S22, verification code acquiring information for current verification is acquired, which includes a verification identifier, and an operation object and operation manner prompt information for acquiring the verification code.

In step S23, an operation action on the operation object according to the operation manner prompt information is received.

In step S24, a first verification code is obtained according to the operation action.

In step S25, a verification request is sent to the network side, wherein the verification request includes the verification identifier and the first verification code.

The technical solution provided by the present embodiment may produce the following advantageous effects: the user operates the operation object according to the operation manner prompt information of the verification code, and sends the result obtained after the operation to the network side to be verified, such that the user does not need to manually input the verification code, thus the verification manner is simplified, and verification failure caused by incorrect manual input by the user is avoided, verification efficiency of the verification code is increased, and the user experience is improved.

After the step S22, the operation object and the operation manner prompt information of the verification code of the current verification acquired from the network side are displayed on the terminal, to allow the user to operate the operation object of the verification code.

Alternatively, in the above described method, the operation object of the verification code includes at least two characters, wherein each character corresponds to a separate movable picture. When the operation object includes a plurality of separate movable pictures, the operation manner prompt information includes prompt information for dragging a specified character in the operation object to a specified position. At this time, the step S23 may be carried out to be: receiving a dragging action on the specified character in the operation object; and the step S24 may be carried out to be: acquiring position information of the dragged character according to the dragging action. The position information is determined according to an arrangement sequence after the character is dragged. For example, the operation object includes four characters "A", "B", "C" and "D", and the operation manner prompt information is to drag and switch positions of the characters "A" and "C". Before the characters "A" and "C" are dragged, position information of the four characters in the operation object correspond to 0x001, 0x002, 0x003 and 0x004, then after the characters "A" and "C" are dragged, the position information of the four characters in the operation object correspond to 0x003, 0x002, 0x001 and 0x004.

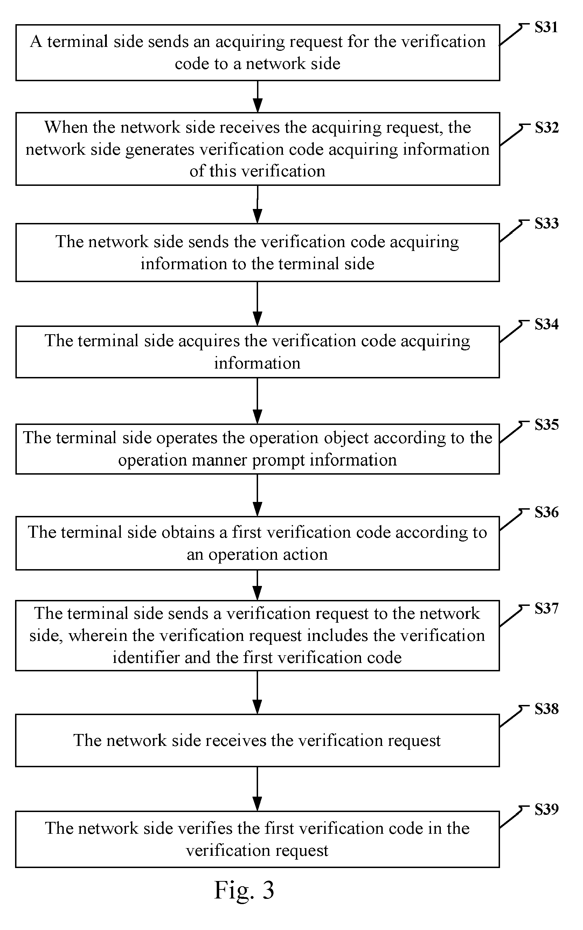

Fig. 3 is a flow chart showing a method for verification using a verification code, according to an exemplary embodiment. Referring to Fig. 3, the method includes the following steps.

In step S31, a terminal side sends an acquiring request for the verification code to a network side.

In step S32, when the network side receives the acquiring request, the network side generates verification code acquiring information for current verification, which includes a verification identifier, and an operation object and operation manner prompt information for acquiring the verification code.

In step S33, the network side sends the verification code acquiring information to the terminal side.

In step S34, the terminal side acquires the verification code acquiring information.

In step S35, the terminal side operates the operation object according to the operation manner prompt information.

In step S36, the terminal side obtains a first verification code according to an operation action.

In step S37, the terminal side sends a verification request to the network side, wherein the verification request includes the verification identifier and the first verification code.

In step S38, the network side receives the verification request.

In step S39, the network side verifies the first verification code in the verification request.

The technical solution provided by the present embodiment may produce the following advantageous effects: the operation object is operated according to the operation manner prompt information of the verification code, and the result obtained after the operation is verified, such that the user does not need to manually input the verification code, thus the verification manner is simplified, and verification failure caused by incorrect manual input by the user is avoided, verification efficiency of the verification code is increased, and the user experience is improved.

Hereinafter, a method for verification using a verification code provided by the present disclosure will be explained by detailed embodiments.

### Embodiment 1

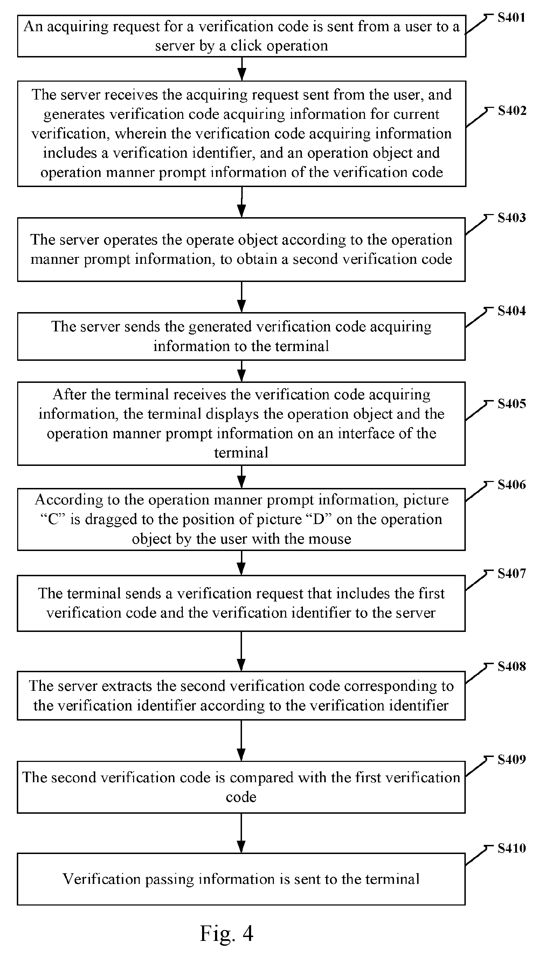

The terminal in this embodiment is a computer that uses a mouse. As shown in Fig. 4, the method includes the following steps.

In step S401, an acquiring request for a verification code is sent from a user to a server by a click operation.

In step S402, the server receives the acquiring request sent from the user, and generates verification code acquiring information for current verification, wherein the verification code acquiring information includes a verification identifier, and an operation object and operation manner prompt information of the verification code. For example, the operation object is six characters "A", "B", "C", "D", "E" and "F" that are arranged in this order in a form of picture, corresponding position information is 0x001, 0x002, 0x003, 0x004, 0x005 and 0x006, and the operation manner prompt information is to drag and switch positions of the characters "C" and "D".

In step S403, the server operates the operate object according to the operation manner prompt information, to obtain a second verification code "A", "B", "D", "C", "E" and "F", and corresponding position information is 0x001, 0x002, 0x004, 0x003, 0x005 and 0x006.

In step S404, the server sends the generated verification code acquiring information to the terminal.

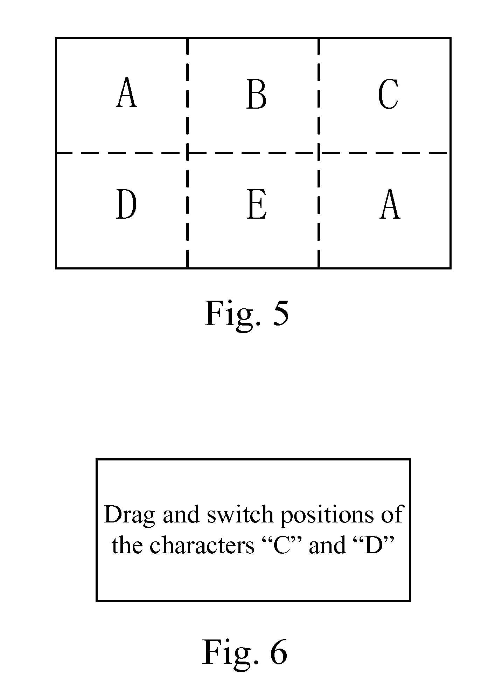

In step S405, after the terminal receives the verification code acquiring information, the terminal displays the operation object and the operation manner prompt information on an interface of the terminal. As shown in Figs. 5 and 6, the operation object and the operation manner prompt information are respectively displayed on the terminal in the form of picture.

In step S406, according to the operation manner prompt information, the positions of the characters "C" and "D" may be switched by dragging picture "C" by the user to the position of picture "D" on the operation object with the mouse, and then a first verification code "A", "B", "D", "C", "E" and "F" is obtained, and corresponding position information is 0x001, 0x002, 0x004, 0x003, 0x005 and 0x006.

In step S407, the terminal sends a verification request that includes the first verification code and the verification identifier, to the server.

In step S408, the server extracts the second verification code corresponding to the verification identifier according to the verification identifier.

In step S409, the second verification code is compared with the first verification code, i.e., the position information of the second verification code 0x001, 0x002, 0x004, 0x003, 0x005 and 0x006 is compared with the position information of the first verification code 0x001, 0x002, 0x004, 0x003, 0x005 and 0x006.

### In step S410, verification passing information is sent to the terminal.

When the technical solution of the present embodiment is adopted, according to the operation manner prompt information of the verification code, the operation object is dragged by clicking with the mouse, and the result obtained after the dragging is verified, such that the user does not need to manually input the verification code, thus the verification manner is simplified, and verification failure caused by incorrect manual input by the user is avoided, verification efficiency of the verification code is increased, and the user experience is improved.

### Embodiment 2

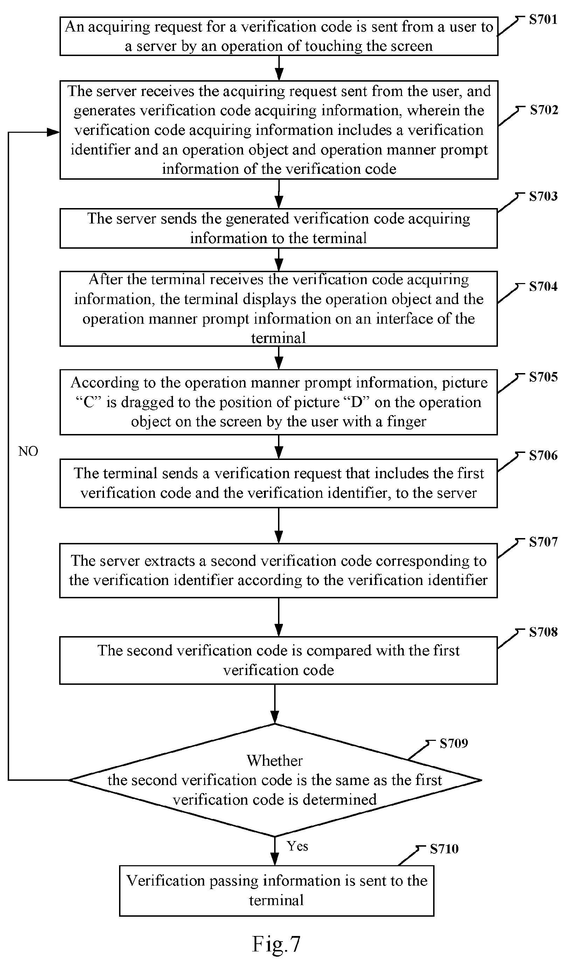

The terminal in this embodiment is a tablet PC that uses a touchscreen. As shown in Fig. 7, the method includes the following steps.

In step S701, an acquiring request for a verification code is sent from a user to a server by an operation of touching the screen.

In step S702, the server receives the acquiring request sent from the user, and generates verification code acquiring information, wherein the verification code acquiring information includes a verification identifier and an operation object and operation manner prompt information of the verification code. For example, the operate object is six characters "A", "B", "C", "D", "E" and "F" that are arranged in this order in a form of picture, and the operation manner prompt information is to drag and switch positions of the characters "C" and "D".

In step S703, the server sends the generated verification code acquiring information to the terminal.

In step S704, after the terminal receives the verification code acquiring information, the terminal displays the operation object and the operation manner prompt information on an interface of the terminal.

In step S705, according to the operation manner prompt information, the positions of the characters "C" and "D" may be switched by dragging picture "C" by the user to the position of picture "D" on the operation object with a finger, and then obtain a first verification code "A", "B", "D", "C", "E" and "F".

In step S706, the terminal sends a verification request that includes the first verification code and the verification identifier, to the server.

In step S707, the server extracts a second verification code corresponding to the verification identifier according to the verification identifier.

In step S708, the second verification code is compared with the first verification code.

In step S709, whether the second verification code is the same as the first verification code is determined; and if the second verification code is the same as the first verification code, step S710 is performed; and if the second verification code is different from the first verification code, it returns the step S702, and verification code acquiring information of next verification is generated.

When the technical solution of the present embodiment is adopted, according to the operation manner prompt information of the verification code, the operation object is dragged by the user touching with a finger, and verifies the result obtained after the dragging, such that the user does not need to manually input the verification code, thus the verification manner is simplified, and verification failure caused by incorrect manual input by the user is avoided, verification efficiency of the verification code is increased. Meanwhile, on the terminal such as the cellphone or the tablet PC that is inconvenient to be operated, such an operation of dragging is simpler, thus the user experience is improved.

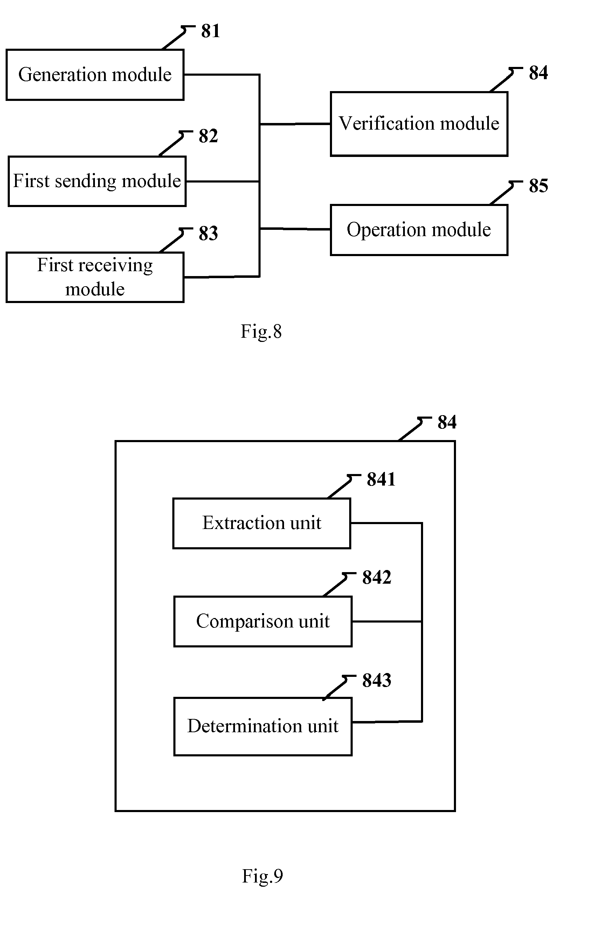

Fig. 8 is a block diagram illustrating a device for verification using a verification code, according to an exemplary embodiment. Referring to Fig. 8, the device includes:
a generation module 81 configured to, when an acquiring request for the verification code from a terminal is received, generate verification code acquiring information for current verification, which includes a verification identifier, and an operation object and operation manner prompt information for acquiring the verification code;
a first sending module 82 configured to send the verification code acquiring information to the terminal;
a first receiving module 83 configured to receive a verification request from the terminal, wherein the verification request includes the verification identifier and a first verification code obtained after the operation object is operated according to the operation manner prompt information;
a verification module 84 configured to verify the first verification code in the verification request; and
an operation module 85 configured to operate the operation object according to the operation manner prompt information, to obtain a second verification code.

As shown in Fig. 9, the verification module 84 includes the following units:
an extraction unit 841 configured to extract the second verification code according to the verification identifier;
a comparison unit 842 configured to compare the first verification code with the second verification code; and
a determination unit 843 configured to determine whether the first verification code is the same as the second verification code.

The technical solution provided by the present embodiment may produce the following advantageous effects: the operation object is operated according to the operation manner prompt information of the verification code, and the result obtained after the operation is verified, such that the user does not need to manually input the verification code, thus the verification manner is simplified, and verification failure caused by incorrect manual input by the user is avoided, verification efficiency of the verification code is increased, and the user experience is improved.

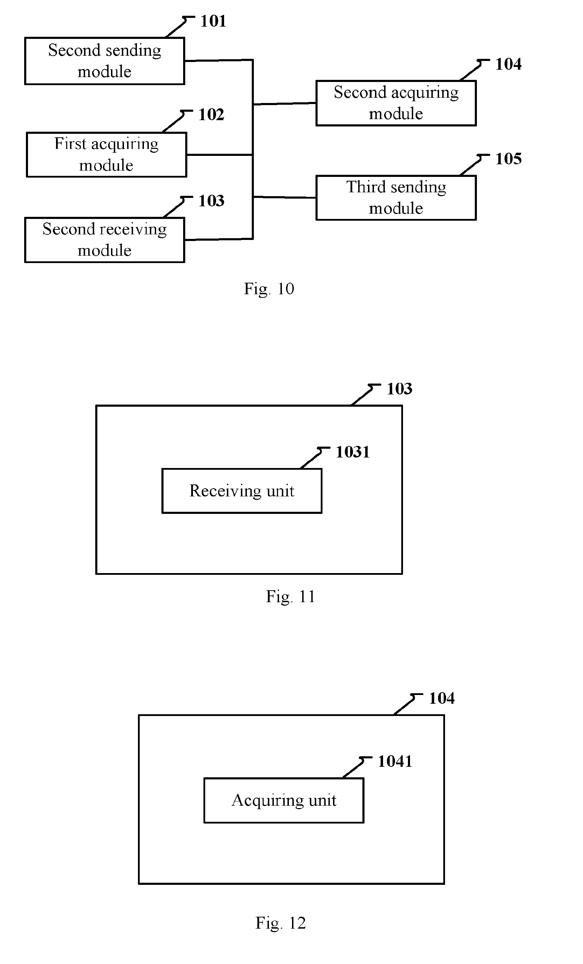

Fig. 10 is a block diagram illustrating a device for verification using a verification code, according to an exemplary embodiment. Referring to Fig. 10, the device includes:
a second sending module 101 configured to send an acquiring request for the verification code to a network side;
a first acquiring module 102 configured to acquire verification code acquiring information for current verification, which includes a verification identifier, and an operation object and operation manner prompt information for acquiring the verification code;
a second receiving module 103 configured to receive an operation action on the operation object according to the operation manner prompt information;
a second acquiring module 104 configured to obtain a first verification code according to the operation action; and
a third sending module 105 configured to send a verification request to the network side, wherein the verification request includes the verification identifier and the first verification code.

As shown in Fig. 11, the second receiving module 103 includes the following units:
a receiving unit 1031 configured to receive a dragging action on a specified character in the operation object.

As shown in Fig. 12, the second acquiring module 104 includes the following unit:
an acquiring unit 1041 configured to acquire position information of the dragged character according to the dragging action.

The technical solution provided by the present embodiment may produce the following advantageous effects: the user operates the operation object according to the operation manner prompt information of the verification code, and sends the result obtained after the operation to the network side to be verified, such that the user does not need to manually input the verification code, thus the verification manner is simplified, and verification failure caused by incorrect manual input by the user is avoided, verification efficiency of the verification code is increased, and the user experience is improved.

In an embodiment, the present disclosure further provides a device for verification using a verification code, including:
a processor;
a memory for storing instructions executable by the processor,
wherein the processor is configured to:
when an acquiring request for the verification code from a terminal is received, generate verification code acquiring information for current verification, which includes a verification identifier, and an operation object and operation manner prompt information for acquiring the verification code;
send the verification code acquiring information to the terminal;
receive a verification request from the terminal, wherein the verification request includes the verification identifier and a first verification code obtained after the operation object is operated according to the operation manner prompt information; and
verify the first verification code in the verification request.

In an embodiment, the present disclosure further provides a device for verification using a verification code, including:
a processor;
a memory for storing instructions executable by the processor,
wherein the processor is configured to:
send an acquiring request for the verification code to a network side;
acquire verification code acquiring information for current verification, which includes a verification identifier, and an operation object and operation manner prompt information for acquiring the verification code;
receive an operation action on the operation object according to the operation manner prompt information;
obtain a first verification code according to the operation action; and
send a verification request to the network side, wherein the verification request includes the verification identifier and the first verification code.

With respect to the devices in the above embodiments, the specific manners for performing operations for respective modules therein have been described in detail in the embodiments with regarding to the methods, which will not be elaborated herein.

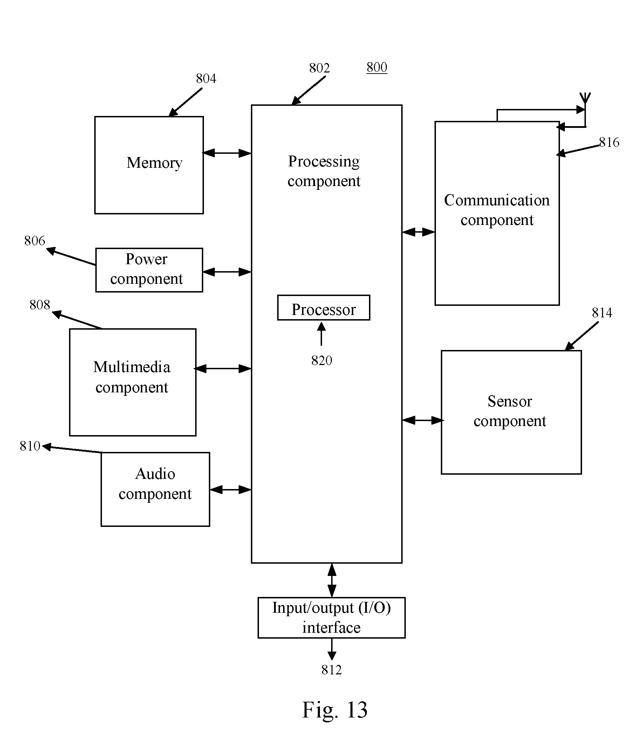

Fig. 13 is a block diagram illustrating a device 800 for verification using a verification code, according to an exemplary embodiment. For example, the device 800 may be a mobile phone, a computer, a digital broadcast terminal, a messaging device, a gaming console, a tablet, a medical device, exercise equipment, a personal digital assistant and the like.

Referring to Fig. 13, the device 800 may include one or more of the following components: a processing component 802, a memory 804, a power component 806, a multimedia component 808, an audio component 810, an input/output (I/O) interface 812, a sensor component 814, and a communication component 816.

The processing component 502 usually controls overall operations of the device 800, such as operations associated with display, telephone calls, data communications, camera operations and recording operations. The processing component 802 may include one or more processors 820 to execute instructions to perform all or a part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any application or method operated on the device 800, contact data, phonebook data, messages, pictures, videos, etc. The memory 804 may be implemented by any type of volatile or non-volatile memory device or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or optical disk.

The power component 806 provides power to various components of the device 800. The power component 806 may include a power management system, one or more power sources, and other components associated with the generation, management, and distribution of power in the device 800.

The multimedia component 808 includes a screen for providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 808 includes a front camera and/or a rear camera. The front camera and/or the rear camera may receive external multimedia data while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, a button, and the like. The button may include, but not limited to: a home button, a volume button, a starting button and a locking button.

The sensor component 814 includes one or more sensors to provide status assessments of various aspects of the device 800. For instance, the sensor component 814 may detect an open/closed status of the device 800, relative position of components, e.g., the display and the keyboard, of the device 800, a change in position of the device 800 or a component of the device 800, a presence or absence of an user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, in a wire or wireless manner, between the device 800 and other devices. The device 800 can access a wireless network based on a communication standard, such as WiFi, 2G or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-bandwidth (UWB) technology, a Bluetooth (BT) technology, and other technologies.

In exemplary embodiments, the device 800 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing the above described methods.

In exemplary embodiments, there further provides a non-transitory computer readable storage medium including instructions, such as included in the memory 804, executable by the processor 820 in the device 800, for performing the above described methods. For example, the non-transitory computer-readable storage medium may be a ROM, a random access memory (RAM), a CD-ROM, a magnetic tape, a floppy disc, an optical data storage device and the like.

There provides a non-transitory computer readable storage medium, when instructions in the storage medium are executed by a processor of a server, the server can execute a method for verification using a verification code, including:
when an acquiring request for the verification code from a terminal is received, generating verification code acquiring information for current verification, which includes a verification identifier, and an operation object and operation manner prompt information for acquiring the verification code;
sending the verification code acquiring information to the terminal;
receiving a verification request from the terminal, wherein the verification request includes the verification identifier and a first verification code obtained after the operation object is operated according to the operation manner prompt information; and
verifying the first verification code in the verification request.

Before the sending the verification identifier to the terminal, the method further includes:
operating the operation object according to the operation manner prompt information, to obtain a second verification code.

The verifying the first verification code in the verification request includes:
extracting the second verification code according to the verification identifier;
comparing the first verification code with the second verification code; and
determining whether the first verification code is the same as the second verification code.

The operation object of the verification code includes at least two characters, wherein each character corresponds to a separate movable picture.

The operation manner prompt information includes prompt information for dragging a specified character in the operation object to a specified position; and
the first verification code includes position information of the obtained character after the character in the operation object is dragged.

The position information is determined according to an arrangement sequence after the character is dragged.

There provides a non-transitory computer readable storage medium, when instructions in the storage medium are executed by a processor of a mobile terminal, the mobile terminal can execute a method for verification using a verification code, including:
sending an acquiring request for the verification code to a network side;
acquiring verification code acquiring information for current verification, which includes a verification identifier, and an operation object and operation manner prompt information for acquiring the verification code;
receiving an operation action on the operation object according to the operation manner prompt information;
obtaining a first verification code according to the operation action; and
sending a verification request to the network side, wherein the verification request includes the verification identifier and the first verification code.

The operation object of the verification code includes at least two characters, wherein each character corresponds to a separate movable picture.

The operation manner prompt information includes prompt information for dragging a specified character in the operation object to a specified position.

The receiving the operation action on the operation object according to the operation manner prompt information includes:
receiving a dragging action on the specified character in the operation object.

The obtaining the first verification code according to the operation action includes:
acquiring position information of the dragged character according to the dragging action.

The position information is determined according to an arrangement sequence after the character is dragged.

There provides a non-transitory computer readable storage medium, when instructions in the storage medium are executed by processors of a mobile terminal and a server, the mobile terminal and the server can execute a method for verification using a verification code, including:
sending an acquiring request for the verification code from a terminal side to a network side;
when the network side receives the acquiring request, generating, by the network side, verification code acquiring information for current verification, which includes a verification identifier, and an operation object and operation manner prompt information for acquiring the verification code;
sending the verification code acquiring information from the network side to the terminal side;
acquiring the verification code acquiring information by the terminal side;
operating the operation object according to the operation manner prompt information by the terminal side;
obtaining a first verification code according to the operation action by the terminal side;
sending a verification request from the terminal side to the network side, wherein the verification request includes the verification identifier and the first verification code;
receiving the verification request by the network side; and
verifying the first verification code in the verification request by the network side.

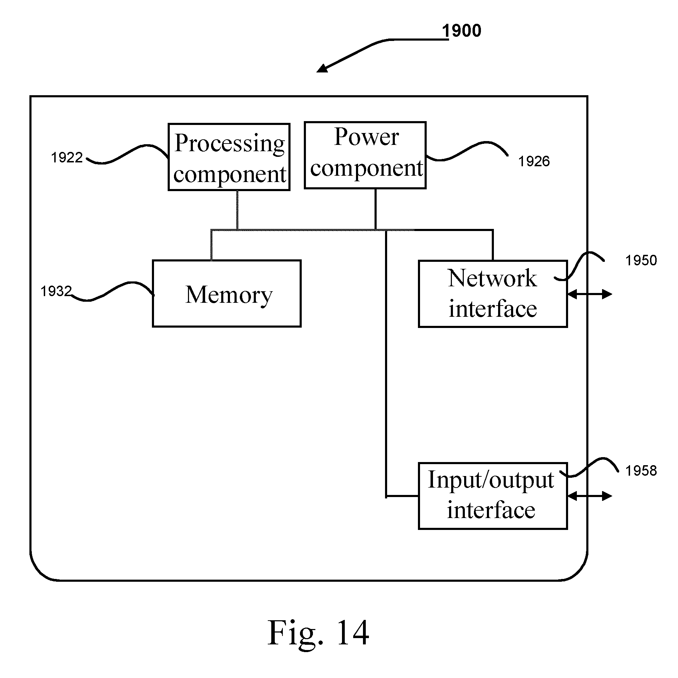

Fig. 14 is a block diagram illustrating a device 1900 for verification using a verification code, according to an exemplary embodiment. For example, the device 1900 may be provided as a server. Referring to Fig. 14, the device 1900 includes a processing component 1922 that further includes one or more processors, and memory resources represented by a memory 1932 for storing instructions executable by the processing component 1922, such as application programs. The application programs stored in the memory 1932 may include one or more modules each corresponding to a set of instructions. Further, the processing component 1922 is configured to execute the instructions to perform the above described methods.

The device 1900 may further include one power component 1926 configured to perform power management of the device 1900, one wired or wireless network interface 1950 configured to connect the device 1900 to a network, and one input/output (I/O) interface 1958. The device 1900 may operate based on an operating system stored in the memory 1932, such as Windows ServerTM, Mac OS XTM, UnixTM, LinuxTM, FreeBSDTM, or the like.

After considering this description and carrying out the disclosure herein, those skilled in the art will easily anticipate other implementation aspects of the present invention. The present invention is meant to cover any variations, usage or adaptive change of the present disclosure, and these variations, usage or adaptive change follow general concept of the present disclosure and include the common knowledge or the customary technical means in the technical field that is not disclosed in the present disclosure. The description and embodiments are only exemplary, and the real scope of the present invention is defined by the following claims.

It should be understood that the present invention is not limited to precise structures that are described above and shown in the accompanying drawings, and may be modified and changed without departing from the scope of the present disclosure. The scope of the present invention is only defined by the appended claims.

## Claims

1. A method for verification using a verification code, at a server, **characterized in that**, the method comprises:
when an acquiring request for the verification code from a terminal is received, generating verification code acquiring information for current verification, which comprises a verification identifier, and an operation object and operation manner prompt information for acquiring the verification code;
sending the verification code acquiring information to the terminal;
receiving a verification request from the terminal, wherein the verification request comprises the verification identifier and a first verification code obtained after the operation object is operated according to the operation manner prompt information; and
verifying the first verification code in the verification request.

2. The method according to claim 1, **characterized in that**, before the sending the verification identifier to the terminal, the method further comprises:
operating the operation object according to the operation manner prompt information, to obtain a second verification code.

3. The method according to claim 1 or claim 2, **characterized in that**, the verifying the first verification code in the verification request comprises:
extracting the second verification code according to the verification identifier;
comparing the first verification code with the second verification code; and
determining whether the first verification code is the same as the second verification code.

4. The method according to any preceding claim, **characterized in that**, the operation object of the verification code comprises at least two characters, wherein each character corresponds to a separate movable picture.

5. The method according to any preceding claim, **characterized in that**, the operation manner prompt information comprises prompt information for dragging a specified character in the operation object to a specified position, and
the first verification code comprises position information of the obtained character after the character in the operation object is dragged.

6. The method according to claim 5, **characterized in that**, the position information is determined according to an arrangement sequence after the character is dragged.

7. A method for verification using a verification code, at a client, **characterized in that**, the method comprises:
sending an acquiring request for the verification code to a network side;
acquiring verification code acquiring information for current verification, which comprises a verification identifier, and an operation object and operation manner prompt information for acquiring the verification code;
receiving an operation action on the operation object according to the operation manner prompt information;
obtaining a first verification code according to the operation action; and
sending a verification request to the network side, wherein the verification request comprises the verification identifier and the first verification code.

8. The method according to claim 7, **characterized in that**, the operation object of the verification code comprises at least two characters, wherein each character corresponds to a separate movable picture,
the operation manner prompt information comprises prompt information for dragging a specified character in the operation object to a specified position,
the receiving the operation action on the operation object according to the operation manner prompt information comprises:
receiving a dragging action on the specified character in the operation object, and the obtaining the first verification code according to the operation action comprises:
acquiring position information of the dragged character according to the dragging action.

9. The method according to claim 8, **characterized in that**, the position information is determined according to an arrangement sequence after the character is dragged.

10. A server device for verification using a verification code, **characterized in that**, the device comprises:
a generation module configured to, when an acquiring request for the verification code from a terminal is received, generate verification code acquiring information for current verification, which comprises a verification identifier, and an operation object and operation manner prompt information for acquiring the verification code;
a first sending module configured to send the verification code acquiring information to the terminal;
a first receiving module configured to receive a verification request from the terminal, wherein the verification request comprises the verification identifier and a first verification code obtained after the operation object is operated according to the operation manner prompt information; and
a verification module configured to verify the first verification code in the verification request.

11. The server device according to claim 10, **characterized in that**, the device further comprises:
an operation module configured to operate the operation object according to the operation manner prompt information, to obtain a second verification code.

12. The server device according to claim 11, **characterized in that**, the verification module comprises:
an extraction unit configured to extract the second verification code according to the verification identifier;
a comparison unit configured to compare the first verification code with the second verification code; and
a determination unit configured to determine whether the first verification code is the same as the second verification code.

13. A client device for verification using a verification code, **characterized in that**, the device comprises:
a second sending module configured to send an acquiring request for the verification code to a network side;
a first acquiring module configured to acquire verification code acquiring information for current verification, which comprises a verification identifier, and an operation object and operation manner prompt information for acquiring the verification code;
a second receiving module configured to receive an operation action on the operation object according to the operation manner prompt information;
a second acquiring module configured to obtain a first verification code according to the operation action; and
a third sending module configured to send a verification request to the network side, wherein the verification request comprises the verification identifier and the first verification code.

14. The client device according to claim 13, **characterized in that**, the second receiving module comprises:
a receiving unit configured to receive a dragging action on a specified character in the operation object, and
the second acquiring module comprises:
an acquiring unit configured to acquire position information of the dragged character according to the dragging action.

15. A computer program, which when executing on a processor of a server, performs a method according to any of claims 1-6 or, which when executing on a processor of a client,
performs a method according to any of claims 7-9.
